# FASCICULE DE BREVET EUROPEEN

(11) **EP 1 807 642 B1**
(45) Date de publication et mention de la délivrance du brevet: **26.08.2009**
(21) Numéro de dépôt: 05815845.2
(22) Date de dépôt: 20.10.2005
(51) Int. Cl.: F16H 61/64, F16H 61/30

(54) **Méthode de contrôle des transmissions automatisées des groupes motopropulseurs de véhicules automobiles et dispositif adapté à la mise en oeuvre de ladite méthode.**
VERFAHREN ZUR STEUERUNG eines AUTOMATIkgetriebes für motorgetriebene KRAFTFAHRZEUGE und einer dementsprechenden Vorrichtung
METHOD FOR CONTROLLING AUTOMATIC TRANSMISSIONS FOR MOTOR VEHICLE POWERTRAINS and device adapted to exceute such a method.

(30) Priorité: 25.10.2004 FR 0411348
(43) Date de publication de la demande: 18.07.2007
(73) Titulaire: RENAULT S.A.S., 92100 Boulogne Billancourt (FR)
(72) Inventeur: GESNOT, Béatrice, F-91510 LARDY (FR); TURPIN, Thomas, F-91400 ORSAY (FR); LALLART, Jean-Marc, F-91470 LIMOURS EN HUREPOIX (FR)
(74) Mandataire: Rougemont, Bernard
(86) Numéro de dépôt international: PCT/FR2005/050872
(87) Numéro de publication internationale: WO 2006/045971

(56) Documents cités:
- EP-A- 0 635 661
- EP-A- 0 754 889
- US-A- 4 653 350
- US-A- 4 875 391

## Description

La présente invention se rapporte à une méthode de contrôle des transmissions automatisées des groupes motopropulseurs de véhicules automobiles et à un dispositif de contrôle adapté a la mise en oeuvre de ladite méthode.

Plus particulièrement, l'invention concerne une méthode de contrôle du changement de rapport de vitesse montant d'une boîte de vitesse automatique à train épicycloïdal pour un véhicule à moteur.

Le document EP 0754889 qui répresente l'état de la technique le plus proche, décrit une méthode selon le préambule de le revendication 1. De telles boîtes de vitesse, comprennent une pluralité de récepteurs adaptée à être alimentée en huile, et un convertisseur de couple qui relie ledit moteur à ladite pluralité de récepteurs ; les changements de rapport de vitesse sont alors réalisés par une bascule de couple entre deux ou plusieurs récepteurs. Ce qui revient à vidanger au moins un récepteur qui devient alors inactif tandis qu'on remplit simultanément au moins un autre récepteur qui devient lui, actif. Un calculateur et des moyens de commandes permettent de définir des instants de début de remplissage et des instants de vidange des récepteurs en tenant compte des caractéristiques hydrauliques de circuits de remplissage et de vidange et des caractéristiques mécaniques des récepteurs.

Toutefois, les caractéristiques de ces circuits hydrauliques évoluent au cours de leur fonctionnement de telle sorte que la synchronisation de la bascule de couple en est modifiée. Et de cette manière, durant le passage d'un rapport de vitesse donné à un rapport de vitesse supérieur, les récepteurs vidangés sont susceptibles de devenir inactifs avant que les récepteurs en cours de remplissage de deviennent actifs. Et en conséquence, le circuit hydraulique devient ouvert et le régime en entrée de la boîte, ou sortie du convertisseur de couple, ou turbine, est susceptible de s'emballer et de détériorer la boîte de vitesse.

Un problème qui se pose et que vise à résoudre la présente invention, est alors de proposer une méthode de contrôle du changement de rapport de vitesse montant, qui permette d'éviter les emballements du régime turbine et ce, quelles que soient les caractéristiques des circuits hydrauliques ou de l'huile utilisée.

Dans ce but, la présente invention propose une méthode de contrôle du changement de rapport de vitesse montant d'une boîte de vitesse automatique d'un véhicule à moteur selon la revendication 1, ladite boîte de vitesse comprenant une pluralité de récepteurs adaptés à être alimentés en huile et un convertisseur de couple qui relie ledit moteur à ladite pluralité de récepteurs, les récepteurs étant adaptés à être activés pour commander l'entraînement dudit véhicule selon différentes vitesses, ladite méthode étant du type selon laquelle, pour un cycle donné d'une succession de cycles de changement de rapport de vitesse croissant, l'huile d'au moins un des récepteurs est vidangée à partir d'un instant de vidange donné tᵥ pour le désactiver, tandis que simultanément dans une phase transitoire, une quantité d'huile est fournie à au moins un autre récepteur à partir d'un instant de remplissage tᵣ postérieur ou antérieur audit instant de vidange tᵥ pour l'activer, et on décale le débit de remplissage du récepteur montant à activer durant ladite phase transitoire dudit cycle donné lorsque l'écart entre le régime turbine mesuré et le régime turbine calculé sur le rapport initial d'un cycle précédent dudit cycle donné, dépasse un seuil déterminé dans ladite phase transitoire ; selon l'invention on décale le débit de remplissage du récepteur montant durant ladite phase transitoire dudit cycle donné en réduisant la durée de temps entre l'instant de remplissage tᵣ et l'instant de vidange tᵥ par rapport audit cycle précédent.

Ainsi, une caractéristique de l'invention réside dans l'ajustement du niveau de pression dans le récepteur montant au moment où le récepteur à vidanger perd sa capacité, en modulant l'instant de remplissage tᵣ par rapport à l'instant de vidange tᵥ et ce, en contrôlant l'écart entre le régime turbine et le régime turbine calculé sur le rapport initial des cycles précédents par rapport à un seuil. De la sorte, en enregistrant systématiquement le dépassement de cette valeur de seuil, à chaque cycle donné on peut décaler le débit de remplissage montant afin qu'il soit actif plus tôt de manière à éviter l'emballement du régime turbine.

Cependant, l'anticipation de l'instant de remplissage tᵣ va dépendre d'un certain nombre de variables de fonctionnement, tels que, par exemple, le couple moteur ou le régime moteur et de façon particulièrement avantageuse, on enregistre les valeurs de variables de fonctionnement dudit véhicule automobile durant ledit cycle de changement de rapport de vitesse précédent ; et on mesure la valeur de chacune desdites variables de fonctionnement durant ledit cycle donné, pour réduire la durée de temps entre l'instant de remplissage tᵣ et l'instant de vidange tᵥ par rapport audit cycle précédent, si et seulement si les valeurs mesurées sont respectivement voisines des valeurs enregistrées. De la sorte, on décale le débit de remplissage du récepteur en cours de remplissage uniquement dans des conditions identiques ou similaires à celles dans lesquelles le régime turbine s'est emballé.

Selon un mode particulier de réalisation de l'invention, on réduit ladite durée de temps entre l'instant de remplissage tᵣ et l'instant de vidange tᵥ dudit cycle donné, d'une valeur de temps qui est une fonction de la durée d'emballement du régime turbine, dans un cycle précédent. De la sorte, l'instant de remplissage du récepteur est modulé en fonction de l'emballement du cycle précédent, c'est-à-dire que plus le régime s'est écarté longtemps de sa vitesse de rotation normale, plus le remplissage du récepteur est anticipé par rapport à la vidange de l'autre récepteur.

Afin de simplifier la méthode de mesure de l'écart entre le régime turbine et régime turbine calculé sur le rapport initial et obtenir une information sur cet écart le plus rapidement possible, on mesure l'écart de rotation dudit régime turbine en déterminant l'écart de rotation maximale dudit régime turbine durant ladite phase transitoire. Ainsi, grâce à des moyens de mémoire adaptés on peut enregistrer aisément, durant la phase transitoire, l'écart de rotation maximal atteint par la turbine, et retransmettre cette valeur à des moyens de calcul appropriés qui en tiendront compte pour ledit cycle donné.

En outre, selon un mode de mise en oeuvre particulièrement avantageux, on mesure le nombre de passage où l'écart de rotation maximale est supérieure audit seuil déterminé ; et on réduit la durée de temps entre l'instant de remplissage tᵣ et l'instant de vidange tᵥ par rapport audit cycle précédent si et seulement si ledit nombre est supérieur à un nombre limite. Selon cette dernière caractéristique on ne procède à une modification de l'instant de remplissage tᵣ que si le moment du dernier emballement de la turbine est synchronisé avec la bascule de couple.

De plus, de façon particulièrement avantageuse on mesure la vitesse de rotation de la turbine durant ladite phase transitoire, par rapport à la vitesse de rotation de la turbine, calculée pour un rapport de vitesse inférieur. De la sorte, la vitesse de rotation de la turbine qui est a priori supérieur dans un rapport de vitesse inférieur comparé à un rapport de vitesse supérieur, est mesurée de façon plus précise durant cette phase transitoire.

Par ailleurs, selon une variante de réalisation préférée, on réduit la durée de temps entre l'instant de remplissage tᵣ et l'instant de vidange tᵥ par rapport audit cycle précédent, si et seulement si la température de l'huile est comprise dans un intervalle déterminé ou bien si la position pédale est sensiblement constante. De la sorte, on s'affranchit de certaines perturbations extérieures à la boîte de vitesse et dans lesquelles il n'est nul nécessaire d'effectuer de correction de remplissage des récepteurs.

Selon un autre objet, la présente invention propose un dispositif de contrôle du changement de rapport de vitesse montant d'une boîte de vitesse automatique d'un véhicule à moteur adapté à la mise en oeuvre de ladite méthode de contrôle telle que décrite ci-dessus, selon la revendication 9.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est un schéma synoptique des différents éléments constitutifs de l'invention et de leurs liaisons entre eux ; et,
- la Figure 2 est un organigramme illustrant la mise en oeuvre de la méthode conformément à l'invention.

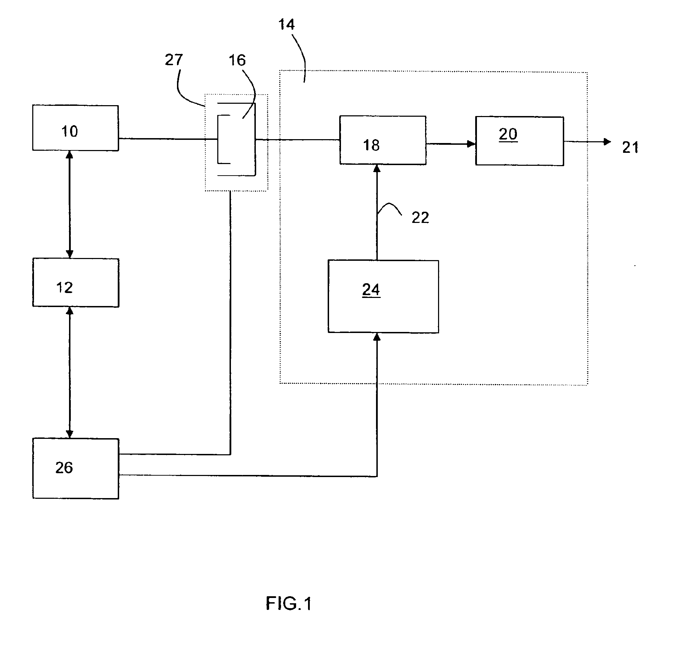

La Figure 1 illustre de façon schématique une installation comprenant un moteur thermique 10 qui est susceptible d'être commandé par une unité de pilotage 12, ledit moteur thermique 10 étant relié à une transmission automatique 14 par l'intermédiaire d'un convertisseur de couple hydraulique 16, dont la sortie est appelée turbine. La transmission automatique 14 comporte des récepteurs 18 correspondant aux freins et aux embrayages et qui sont adaptés à transmettre un couple de rotation à des trains épicycloïdaux 20 eux-mêmes reliés à des roues 21. En outre, les récepteurs 18 transmettent un couple de rotation qui est fonction de la pression en huile du circuit amont 22 joignant un distributeur hydraulique 24. Des moyens de commandes 26 comportant des moyens de calcul et des moyens mémoires, et reliés à l'unité de pilotage 12, sont adaptés à commander le distributeur hydraulique 24. Par ailleurs, des moyens de mesure 27 de la vitesse de rotation de la turbine 16 sont directement reliés à ces moyens de commandes 26 afin de leur fournir une mesure de cette vitesse.

Ainsi, le régime du moteur 10 est adapté à être contrôlé par un conducteur au moyen de l'unité de pilotage 12, et le moteur 10 est susceptible de fournir un couple hydraulique aux récepteurs 18 par l'intermédiaire du convertisseur de couple 16. En outre, le distributeur hydraulique 24 grâce aux moyens de commande 26, eux-mêmes reliés à l'unité de pilotage 12, est susceptible de moduler la pression d'huile dans le circuit amont 22 pour contrôler les récepteurs 18.

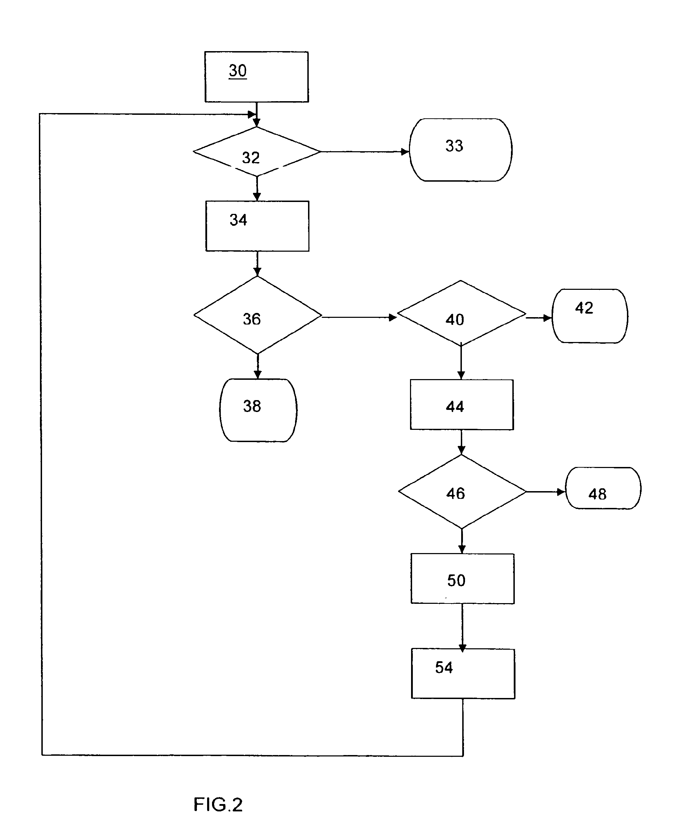

On décrira maintenant en référence à la Figure 2, une méthode de contrôle de l'installation précitée conforme à l'invention. Ladite méthode est adaptée au passage d'un rapport de vitesse inférieur à un rapport de vitesse supérieur. Pour ce faire, les récepteurs 18 sont activés pour commander l'entraînement dudit véhicule selon différentes vitesses. En outre, afin de réaliser le changement de rapport de vitesse, on vidange l'huile d'au moins un des récepteurs 18 à partir d'un instant de vidange tᵥ dans le but de le désactiver alors que simultanément, dans une phase transitoire, on remplit au moins un autre récepteur desdits récepteur 18 à partir d'un instant de remplissage tᵣ afin de l'activer.

La présente méthode, permet d'éviter que la turbine ne dépasse une vitesse de rotation supérieure à une certaine vitesse limite de bon fonctionnement durant la phase transitoire où au moins un des récepteurs 18 se vide tandis qu'au moins un autre se remplit. Et dans ce but, on enregistre par l'intermédiaire des moyens de mesure 27, le régime turbine 16 durant les cycles de changement de rapport de vitesse croissants de manière à pouvoir avancer l'instant de remplissage tᵣ pour les cycles suivants.

Par ailleurs, et dans une première phase 30 à un instant donné, cela en préalable au changement de rapport de vitesse, on identifie une zone de fonctionnement qui correspond à des valeurs de variable de fonctionnement du véhicule automobile du type, régime moteur, vitesse du véhicule, ou couple de l'arbre moteur et pour lesquelles des données sont disponibles dans les moyens mémoires.

Ensuite, selon un premier test 32, on vérifie que l'écart entre le régime turbine mesuré et le régime turbine calculé sur le rapport initial, est bien supérieur à un seuil de détection.

Si cela n'est pas le cas, selon une étape de fin 33 on ne procède à aucune modification de l'instant de remplissage tᵣ à l'instant donné. En revanche, si tel en est le cas et selon une deuxième étape 34, on procède à l'enregistrement de l'écart maximal entre le régime turbine mesuré et le régime turbine calculé sur le rapport initial, de l'instant où cet écart maximal a été détecté et de l'instant particulier du début où cet écart devient supérieur au seuil de détection.

Ensuite, les moyens de commande 26 vérifient, d'une part que l'emballement de la turbine détecté est suffisamment important pour nécessiter une modification de l'instant de remplissage tᵣ et d'autre part que l'emballement détecté n'a pas de causes externes à la boîte de vitesse.

Dans ce but, selon un deuxième test 36, on vérifie que la vitesse maximale est inférieure à un seuil de validation. Selon une autre variante de réalisation dans ce deuxième test 36, on vérifie que ledit instant particulier correspondant à l'emballement maximal détecté, est éloigné dans le temps par rapport à la bascule de couple. Ainsi, si la réponse à l'une ou à l'autre des questions est positive, alors selon une deuxième étape de fin 38, on ne procède à aucune modification de l'instant de remplissage tᵣ à l'instant donné.

En revanche, si la réponse est négative on procède à un troisième test 40 dans lequel on vérifie que la température de l'huile est comprise entre un seuil maximal et un seuil minimal et dans lequel on vérifie également que les mouvements d'une pédale d'accélération du moteur sont relativement faibles.

Si la réponse est négative, on ne procède à aucune modification et on termine selon une troisième étape de fin 42. En revanche, si la réponse est positive, selon une troisième phase 44, on décrémente un compteur dans lequel on enregistre le nombre de fois où l'écart entre le régime turbine mesuré et le régime turbine calculé sur le rapport initial, est supérieur audit seuil de validation. Ensuite, selon un quatrième test 46 on vérifie que ce nombre de fois où l'écart maximal est supérieur au seuil de validation, a atteint un nombre minimal.

Si ce nombre n'est pas atteint, on termine le programme selon une quatrième étape de fin 48, sans procéder à aucune modification de l'instant de remplissage tᵣ, sinon selon une quatrième étape 50, on procède au calcul d'une valeur de correction directement proportionnelle à la durée d'emballement. Selon une sixième étape 54 on calcule une nouvelle valeur de l'instant de remplissage tᵣ par rapport au temps de vidange tᵥ pour un futur cycle de changement de rapport de vitesse, et ce, pour une zone de fonctionnement identique à celle du cycle donné.

De la sorte, au cycle suivant, une correction sur l'instant de remplissage tᵣ par rapport au temps de vidange tᵥ pourra être donnée afin que certains des récepteurs 18 se remplissent par anticipation, afin d'éviter que le convertisseur de couple 16 ne s'emballe.

Bien évidemment, les étapes de fin ne signifient pas que le programme se termine, mais simplement qu'il se termine pour le cycle considéré. Pour un nouveau cycle, le programme est réinitialisé et redémarre à la première phase 30.

## Revendications

1. Méthode de contrôle du changement de rapport de vitesse montant d'une boîte de vitesse automatique (14) d'un véhicule à moteur (10), ladite boîte de vitesse comprenant une pluralité de récepteurs (18) adaptés à être alimentés en huile et un convertisseur de couple (16) qui relie ledit moteur à ladite pluralité de récepteurs (18), les récepteurs étant adaptés à être activés pour commander l'entraînement dudit véhicule selon différentes vitesses, ladite méthode étant du type selon laquelle, pour un cycle donné d'une succession de cycles de changement de rapport de vitesse croissant, l'huile d'au moins un des récepteurs est vidangée à partir d'un instant de vidange donné tᵥ pour le désactiver, tandis que simultanément dans une phase transitoire, une quantité d'huile est fournie à au moins un autre récepteur à partir d'un instant de remplissage tᵣ postérieur ou antérieur audit instant de vidange tᵥ pour l'activer, **caractérisée en ce que** le débit de remplissage du récepteur montant est décalé durant ladite phase transitoire dudit cycle donné lorsque l'écart entre régime turbine mesuré et régime turbine calculé sur le rapport initial d'un cycle précédent dudit cycle donné, dépasse un seuil déterminé dans ladite phase transitoire ; et qu'
on ajuste le niveau de pression dans le récepteur montant au moment où le récepteur sortant perd sa capacité durant ladite phase transitoire dudit cycle donné en réduisant la durée de temps entre l'instant de remplissage tᵣ et l'instant de vidange tᵥ par rapport audit cycle précédent.

2. Méthode de contrôle selon la revendication 1, **caractérisée en ce qu'**en outre, on enregistre les valeurs de variables de fonctionnement dudit véhicule automobile durant ledit cycle de changement de rapport de vitesse précédent ;
et **en ce qu'**on mesure la valeur de chacune desdites variables de fonctionnement durant ledit cycle donné, pour réduire la durée de temps entre l'instant de remplissage tᵣ et l'instant de vidange tᵥ par rapport audit cycle précédent si et seulement si les valeurs mesurées sont respectivement voisines des valeurs enregistrées.

3. Méthode de contrôle selon la revendication 1 ou 2, **caractérisée en ce qu'**on réduit ladite durée de temps entre l'instant de remplissage tᵣ et l'instant de vidange tᵥ dudit cycle donné, d'une valeur de temps qui est une fonction de la durée d'emballement du régime turbine, dans un cycle précédent.

4. Méthode de contrôle selon l'une quelconque des revendications 1 à 3, **caractérisée en ce qu'**on mesure l'écart maximal entre régime turbine mesuré et régime turbine calculé sur le rapport initial durant ladite phase transitoire.

5. Méthode de contrôle selon la revendication 4, **caractérisée en ce qu'**on mesure en outre, la fréquence des cycles où l'écart de rotation maximale est supérieure audit seuil déterminé ;
et **en ce qu'**on réduit la durée de temps entre l'instant de remplissage tᵣ et l'instant de vidange tᵥ par rapport audit cycle précédent si et seulement si ladite fréquence est supérieure à une fréquence limite.

6. Méthode de contrôle selon l'une quelconque des revendications 1 à 5, **caractérisée en ce qu'**on mesure la vitesse de rotation de la turbine durant ladite phase transitoire, par rapport à la vitesse de rotation de la turbine, calculée pour un rapport de vitesse inférieur.

7. Méthode de contrôle selon l'une quelconque des revendications 1 à 6, **caractérisée en ce qu'**on réduit la durée de temps entre l'instant de remplissage tᵣ et l'instant de vidange tᵥ par rapport audit cycle précédent si et seulement si la température de l'huile est comprise dans un intervalle déterminé.

8. Méthode de contrôle selon l'une quelconque des revendications 1 à 7, **caractérisée en ce qu'**on réduit la durée de temps entre l'instant de remplissage tᵣ et l'instant de vidange tᵥ par rapport audit cycle précédent si la position pédale est sensiblement constante.

9. Dispositif de contrôle du changement de rapport de vitesse montant d'une boîte de vitesse automatique (14) d'un véhicule à moteur (10) adapté à la mise en oeuvre de ladite méthode de contrôle selon l'une des revendications 1 à 8.

## Claims

1. Method for controlling the upshift of an automatic gearbox (14) of a motor vehicle (10), the said gearbox comprising a plurality of receivers (18) designed to be supplied with oil and a torque converter (16) which connects the said engine to the said plurality of receivers (18), the receivers being designed to be activated in order to make the said vehicle drive at different speeds, the said method being of the type whereby, for a given cycle of a succession of upshifts, the oil from at least one of the receivers is voided from a given voiding instant tᵥ onwards, in order to deactivate it, while at the same time in a transient phase a quantity of oil is supplied to at least one other receiver from a filling instant tᵣ onwards that comes after or before the said voiding instant tᵥ in order to activate it, **characterized in that** the rate of filling of the upshift receiver is shifted during the said transient phase of the said given cycle when the difference between the measured turbine speed and the turbine speed calculated on the initial ratio of a cycle preceding the said given cycle exceeds a determined threshold in the said transient phase; and **in that** the pressure level in the upshift receiver at the moment that the outgoing receiver loses its capacity during the said transient phase of the said given cycle is adjusted by reducing the period of time between the filling instant tᵣ and the voiding instant tᵥ, by comparison with the preceding cycle.

2. Control method according to Claim 1, **characterized in that** the values of operating variables of the said motor vehicle are also recorded during the said previous gearshift cycle;
and **in that** the value of each of the said operating variables during the said given cycle is measured in order to reduce the period of time between the filling instant tᵣ and the voiding instant tᵥ by comparison with the said preceding cycle if and only if the measured values are respectively close to the recorded values.

3. Control method according to Claim 1 or 2, **characterized in that** the said period of time between the filling instant tᵣ and the voiding instant tᵥ of the given cycle is reduced by an amount of time that is a function of the duration of turbine overspeeding in a previous cycle.

4. Control method according to any one of Claims 1 to 3, **characterized in that** the maximum difference between the measured turbine speed and the turbine speed calculated on the initial ratio during the said transient phase is measured.

5. Control method according to Claim 4, **characterized in that** the frequency of the cycles in which the maximum rotational difference exceeds the said determined threshold is also measured;
and **in that** the period of time between the filling instant tᵣ and the voiding instant tᵥ is reduced by comparison with the said preceding cycle if and only if the said frequency is higher than a limiting frequency.

6. Control method according to any one of Claims 1 to 5, **characterized in that** the rotational speed of the turbine during the said transient phase is measured against the rotational speed of the turbine calculated for a lower speed ratio.

7. Control method according to any one of Claims 1 to 6, **characterized in that** the period of time between the filling instant tᵣ and the voiding instant tᵥ is reduced by comparison with the previous cycle if and only if the oil temperature lies within a determined range.

8. Control method according to any one of Claims 1 to 7, **characterized in that** the period of time between the filling instant tᵣ and the voiding instant tᵥ is reduced by comparison with the said preceding cycle if the pedal position is substantially constant.

9. Device for controlling the upshift of an automatic gearbox (14) of a motor vehicle (10) designed for implementing the said control method according to one of Claims 1 to 8.

## Patentansprüche

1. Verfahren zur Kontrolle des Schaltens eines Automatikgetriebes (14) eines Kraftfahrzeugs (10) in eine höhere Fahrstufe, wobei das Getriebe mehrere Nehmer (18), die geeignet sind, um mit Öl versorgt zu werden, und einen Drehmomentwandler (16) aufweist, der den Motor mit den mehreren Nehmern (18) verbindet, wobei die Nehmer aktiviert werden können, um den Antrieb des Fahrzeugs gemäß verschiedenen Fahrstufen zu steuern, wobei das Verfahren von der Art ist, bei der für einen gegebenen Zyklus einer Folge von Zyklen einer aufsteigenden Fahrstufenschaltung das Öl mindestens eines der Nehmer ab einem gegebenen Entleerungszeitpunkt tᵥ entleert wird, um ihn zu deaktivieren, während gleichzeitig in einer Übergangsphase eine Ölmenge an mindestens einen anderen Nehmer ab einem Füllzeitpunkt tᵣ vor oder nach dem Entleerungszeitpunkt tᵥ geliefert wird, um ihn zu aktivieren, **dadurch gekennzeichnet, dass** der Fülldurchsatz des Nehmers der höheren Fahrstufe während der Übergangsphase des gegebenen Zyklus verschoben wird, wenn die Abweichung zwischen gemessener Turbinendrehzahl und an der Ausgangsschaltstufe eines vor dem gegebenen Zyklus liegenden Zyklus berechneter Turbinendrehzahl eine bestimmte Schwelle in der Übergangsphase überschreitet; und dass der Druckpegel im Nehmer der höheren Fahrstufe in dem Moment angepasst wird, in dem der bisherige Nehmer seine Leistungsfähigkeit während der Übergangsphase des gegebenen Zyklus verliert, indem die Zeitdauer zwischen dem Füllzeitpunkt tᵣ und dem Entleerungszeitpunkt tᵥ bezüglich des vorhergehenden Zyklus reduziert wird.

2. Kontrollverfahren nach Anspruch 1, **dadurch gekennzeichnet, dass** außerdem die Werte von Betriebsvariablen des Kraftfahrzeugs während des vorhergehenden Fahrstufenschaltzyklus gespeichert werden;
und dass der Wert jeder der Betriebsvariablen während des gegebenen Zyklus gemessen wird, um die Zeitdauer zwischen dem Füllzeitpunkt tᵣ und dem Entleerungszeitpunkt tᵥ bezüglich des vorhergehenden Zyklus dann, und nur dann zu reduzieren, wenn die gemessenen Werte nahe den gespeicherten Werten sind.

3. Kontrollverfahren nach Anspruch 1 oder 2, **dadurch gekennzeichnet, dass** die Zeitdauer zwischen dem Füllzeitpunkt tᵣ und dem Entleerungszeitpunkt tᵥ des gegebenen Zyklus um einen Zeitwert reduziert wird, der eine Funktion der Durchdrehdauer der Turbinendrehzahl in einem vorhergehenden Zyklus ist.

4. Kontrollverfahren nach einem der Ansprüche 1 bis 3, **dadurch gekennzeichnet, dass** die maximale Abweichung zwischen gemessener Turbinendrehzahl und an der Ausgangsschaltstufe berechneter Turbinendrehzahl während der Übergangsphase gemessen wird.

5. Kontrollverfahren nach Anspruch 4, **dadurch gekennzeichnet, dass** außerdem die Frequenz der Zyklen gemessen wird, in denen die Abweichung der maximalen Drehung größer als die bestimmte Schwelle ist;
und dass die Zeitdauer zwischen dem Füllzeitpunkt tᵣ und dem Entleerungszeitpunkt tᵥ bezüglich des vorhergehenden Zyklus reduziert wird, wenn, und nur wenn, die Frequenz höher ist als eine Grenzfrequenz.

6. Kontrollverfahren nach einem der Ansprüche 1 bis 5, **dadurch gekennzeichnet, dass** die Drehgeschwindigkeit der Turbine während der Übergangsphase bezüglich der Drehgeschwindigkeit der Turbine gemessen wird, die für eine niedrigere Fahrstufe berechnet wird.

7. Kontrollverfahren nach einem der Ansprüche 1 bis 6, **dadurch gekennzeichnet, dass** die Zeitdauer zwischen dem Füllzeitpunkt tᵣ und dem Entleerungszeitpunkt tᵥ bezüglich des vorhergehenden Zyklus reduziert wird, wenn, und nur wenn, die Temperatur des Öls in einem bestimmten Bereich liegt.

8. Kontrollverfahren nach einem der Ansprüche 1 bis 7, **dadurch gekennzeichnet, dass** die Zeitdauer zwischen dem Füllzeitpunkt tᵣ und dem Entleerungszeitpunkt tᵥ bezüglich des vorhergehenden Zyklus reduziert wird, wenn die Pedalstellung im Wesentlichen konstant ist.

9. Vorrichtung zur Kontrolle des Schaltens eines Automatikgetriebes (14) eines Kraftfahrzeugs (10) in eine höhere Fahrstufe, die für die Anwendung des Kontrollverfahrens nach einem der Ansprüche 1 bis 8 geeignet ist.
